# EUROPÄISCHE PATENTSCHRIFT

(11) **EP 1 801 613 B1**
(45) Veröffentlichungstag und Bekanntmachung des Hinweises auf die Patenterteilung: **29.08.2012**
(21) Anmeldenummer: 06024093.4
(22) Anmeldetag: 21.11.2006
(51) Int. Cl.: G01S 15/87, G01S 13/87, G01S 13/93, G01S 15/93, G01S 7/527, G01S 7/524

(54) **Verfahren und Vorrichtung zum Erfassen von Objekten in der Umgebung eines Fahrzeugs**
Method and device for detecting objects in the vicinity of a motor vehicle
Procédé et dispositif destinés à la détection d'objets dans l'environnement d'un véhicule

(30) Priorität: 24.12.2005 DE 102005062263
(43) Veröffentlichungstag der Anmeldung: 27.06.2007
(73) Patentinhaber: Volkswagen Aktiengesellschaft, 38440 Wolfsburg (DE)
(72) Erfinder: Katzwinkel, Reiner, 38527 Meine (DE); Schöning, Volkmar, 30900 Wedemark (DE)

(56) Entgegenhaltungen:
- WO-A1-00/73818
- DE-A1- 3 821 577
- DE-A1- 19 856 313
- GB-A- 1 282 777
- US-A- 6 124 823
- US-A1- 2003 060 945
- US-A1- 2005 195 383
- US-B1- 6 778 468

## Beschreibung

Die vorliegende Erfindung betrifft ein Verfahren zum Erfassen von Objekten, insbesondere in der Umgebung eines Fahrzeugs, bei dem Objekte in einem ersten Abstandsbereich mittels eines ersten Abstandssensors und Objekte in einem zweiten Abstandsbereichs mittels eines zweiten Abstandssensors detektiert werden, wobei die beiden Abstandsbereiche nicht identisch sind und die obere Grenze des zweiten Abstandsbereichs weiter entfernt als die obere Grenze des ersten Abstandsbereichs ist. Ferner betrifft die Erfindung eine Vorrichtung zum Erfassen von Objekten, insbesondere in der Umgebung eines Fahrzeugs mit zumindest einem ersten Abstandssensor für Objekte in einem ersten Abstandsbereich, einem zweiten Abstandssensor für Objekte in einem zweiten Abstandsbereich, wobei die beiden Abstandsbereiche nicht identisch sind und die obere Grenze des zweiten Abstandsbereichs weiter entfernt als die obere Grenze des ersten Abstandsbereichs ist. Ferner weist die Vorrichtung eine oder mehrere Steuereinrichtungen auf, mit welcher bzw. mit welchen die beiden Abstandssensoren so ansteuerbar sind, dass sie jeweils zu einem Zeitpunkt ein Signal emittieren und innerhalb eines späteren Zeitintervalls ein reflektiertes und/oder gestreutes Signal detektieren. Schließlich betrifft die Erfindung eine Parklenk-Assistenz-Vorrichtung für Fahrzeuge mit einer entsprechenden Vorrichtung zum Erfassen von Objekten.

In einem Fahrzeug gibt es verschiedene Fahrer-Assistenzsysteme mit Sensoren, die Signale emittieren und reflektierte oder gestreute Signale detektieren. Für das Erkennen von Objekten und für das Messen des Abstands zu diesen Objekten werden zum Beispiel Ultraschallsensoren verwendet.

Aus der DE 38 21 577 A1 ist beispielsweise ein Verfahren und eine Vorrichtung zur Hinderniserkennung mit Ultraschallentfernungsmessung beschrieben. In der DE 198 56 313 A1 ist ein Verfahren zur Überwachung eines mehrkanaligen Abstandsmesssystems für Fahrzeuge, bei welchen Abstandssensoren verwendet werden, beschrieben. Derartige Abstandsmesssysteme werden bei Fahrzeugen üblicherweise zur Parkdistanzkontrolle eingesetzt.

Ein Verfahren und eine Vorrichtung gemäß dem Oberbegriff des Verfahrensanspruchs 1, bzw. ist dem Oberbegriff des Vorrichtungsanspruchs 11, ist aus der WO 00/73818 A1 und ebenfalls aus der GB 1282 777 bekannt.

Des Weiteren ist aus der EP 1 105 749 B1 ein Verfahren und eine Vorrichtung zur Erfassung von Objekten bekannt, die in einem Kraftfahrzeug als Einparkhilfe-Assistenz-Vorrichtung verwendet wird. Bei der Vorrichtung wird eine Anzahl von Abstandssensoren eingesetzt.

Bei Systemen und Verfahren bei denen zwei oder mehr Abstandssensoren eingesetzt werden, ergibt sich das Problem, dass es zu einer Signalkollision kommen kann. Eine solche Kollision tritt dann auf, wenn ein Sensor ein Signal detektiert, welches von einem anderen Sensor emittiert wurde und als ein Signal interpretiert, welches von dem einen Sensor emittiert wurde. In diesem Fall wird beispielsweise die Laufzeit eines Ultraschallsignals falsch berechnet, so dass es zu einer fehlerhaften Abstandsmessung kommt.

Dieses Problem könnte zwar dadurch umgangen werden, dass die von den Sensoren emittierten Signale unterschiedliche Charakteristiken haben, so dass ermittelt werden kann, welches gestreute oder reflektierte Signal von welchem Sensor ursprünglich emittiert wurde. Aus Kostengründen ist es jedoch wünschenswert, bei einem Fahrzeug identische Abstandssensoren einzusetzen.

Es ist daher die Aufgabe der vorliegenden Erfindung, ein Verfahren und eine Vorrichtung der eingangs genannten Art bereitzustellen, bei denen eine Signalkollision der Signale verschiedener Abstandssensoren vermieden wird.

Diese Aufgabe wird durch ein Verfahren mit den Merkmalen des Anspruchs 1 und durch eine Vorrichtung mit den Merkmalen des Anspruchs 11 gelöst. Vorteilhafte Aus- und Weiterbildungen ergeben sich aus den Unteransprüchen. Ferner wird erfindungsgemäß eine Parklenk-Assistenz-Vorrichtung für Fahrzeuge bereitgestellt.

Bei dem erfindungsgemäßen Verfahren emittieren die beiden Abstandssensoren jeweils ein Signal. Der erste Abstandssensor detektiert reflektierte und/oder gestreute Signale, deren Laufzeit kleiner als die Laufzeit ist, welche einer Reflektion des emittierten Signals an einem Objekt in einem Abstand entspricht, welcher der oberen Grenze des ersten Abstandsbereichs entspricht und der zweite Abstandssensor detektiert reflektierte und/oder gestreute Signale, deren Laufzeit größer als die Laufzeit ist, welche einer Reflektion an einem Objekt in einem Abstand entspricht, welcher der unteren Grenze des zweiten Abstandsbereichs oder der oberen Grenze des ersten Abstandsbereichs entspricht.

Die von den Abstandssensoren detektierten Signale werden somit laufweitenabhängig gefiltert. Auf diese Weise können zwei identische Abstandssensoren verwendet werden, die gleichartige Signale emittieren, eine Signalkollision jedoch vermieden wird.

Bei den Signalen handelt es sich insbesondere um Schallwellen. Der Einsatz von Ultraschall ist insbesondere bei einem Einsatz im Nahbereich, zum Beispiel für die Parkdistanzkontrolle und für einen Parklenk-Assistenten eines Fahrzeugs, bevorzugt.

Gemäß einer bevorzugten Ausgestaltung des erfindungsgemäßen Verfahrens detektiert der erste Abstandssensor reflektierte oder gestreute Signale, deren Laufzeit größer als die Laufzeit ist, welche einer Reflektion des emittierten Signals an einem Objekt in einem Abstand entspricht, welcher der unteren Grenze des ersten Abstandsbereichs entspricht. Ferner detektiert der zweite Abstandssensor vorzugsweise reflektierte oder gestreute Signale, deren Laufzeit kleiner als die Laufzeit ist, welche einer Reflektion des emittierten Signals an einem Objekt in einem Abstand entspricht, welcher der oberen Grenze des zweiten Abstandsbereichs entspricht. Auf diese Weise detektieren die beiden Abstandssensoren nur Signale in einem relativ schmalen Zeitfenster, der für die gewünschten Abstandsbereiche relevant ist.

Gemäß einer bevorzugten Weiterbildung des erfindungsgemäßen Verfahrens detektiert der erste Abstandssensor nur Signale, die oberhalb eines ersten Schwellpegels liegen, und der zweite Abstandssensor detektiert nur Signale, die oberhalb eines zweiten Schwellpegels liegen, wobei der erste Schwellpegel höher als der zweite Schwellpegel ist. Durch eine Signalfilterung mittels der Schwellpegel können Störsignale und Rauschen herausgefiltert werden. Der Schwellwert des zweiten Abstandssensors, der für einen weiteren Abstandsbereich bestimmt ist, ist im Vergleich zum Schwellwert des ersten Abstandsensors für den näheren Abstandsbereich abgesenkt, da der Signalpegel - bei Ultraschallsensoren der Schallpegel - welchen der zweiten Abstandssensor detektiert, geringer ist. Die Schwellpegel werden daher an die Abstandsbereiche der Sensoren angepasst.

Die beiden Abstandsbereiche sind vorzugsweise disjunkt. Hierdurch können wirkungsvoll Signalkollisionen vermieden werden.

Zusätzlich zu der vorstehend beschriebenen laufweitenabhängigen Filterung können die von den beiden Abstandssensoren emittierten Signale kodiert werden. Insbesondere eine Kodierung mittels Pulsweitenmodulation und/oder Amplitudenmodulation ist bevorzugt. Ferner kann die Sendefrequenz der emittierten Signale verändert werden. Schließlich kann die Geschwindigkeit des Fahrzeugs gemessen werden und die Abstandssensoren in Abhängigkeit von der gemessenen Geschwindigkeit aktiviert werden. Auf diese Weise können Sensoren, die typischerweise bei bestimmten Geschwindigkeiten nicht zum Einsatz kommen, abgeschaltet werden, so dass auch hierdurch eine Signalkollision mit anderen Sensoren für andere Geschwindigkeitsbereiche verhindert wird. Beispielsweise reicht es aus, wenn die Sensoren für die Parkdistanzkontrolle oder einen Parklenk-Assistenten nur bei sehr geringen Geschwindigkeiten aktiviert werden.

Die beiden Abstandssensoren emittieren die Signale vorzugsweise gleichzeitig. Ferner können die beiden Abstandssensoren die Signale auch zeitversetzt emittieren, wenn die oberen Grenzen der beiden Abstandsbereiche zusammenfallen.

Die erfindungsgemäße Vorrichtung zum Erfassen von Objekten, insbesondere in der Umgebung eines Fahrzeugs, ist dadurch gekennzeichnet, dass der erste Abstandssensor von der Steuereinrichtung so steuerbar ist, dass er nur Signal detektiert, deren Laufzeit kleiner als die Laufzeit ist, welche einer Reflektion des emittierten Signals an einem Objekt, in einem Abstand entspricht, welcher der oberen Grenze des ersten Abstandsbereichs entspricht, und dass der zweite Abstandssensor von der Steuereinrichtung so steuerbar ist, dass er nur Signal detektiert, deren Laufzeit größer als die Laufzeit ist, welche einer Reflektion an einem Objekt in einem Abstand entspricht, welcher der unteren Grenze des zweiten Abstandsbereichs oder der oberen Grenze des ersten Abstandsbereichs entspricht.

Die beiden Abstandssensoren sind insbesondere Ultraschallsensoren. Bevorzugt handelt es sich um identische Ultraschallsensoren. Hierdurch können die Kosten für die Herstellung eines Fahrzeugs reduziert werden.

Gemäß einer bevorzugten Weiterbildung der erfindungsgemäßen Vorrichtung ist der erste Abstandssensor von der Steuereinrichtung so steuerbar, dass er nur Signale detektiert, deren Laufzeit größer als die Laufzeit ist, welche eine Reflektion des emittierten Signals an einem Objekt in einem Abstand entspricht, welcher der unteren Grenze des ersten Abstandsbereichs entspricht. Gleichermaßen ist der zweite Abstandssensor vorzugsweise von der Steuereinrichtung so steuerbar, dass er nur Signal detektiert, deren Laufzeit kleiner als die Laufzeit ist, welche einer Reflektion des emittierten Signals an einem Objekt in einem Abstand entspricht, welcher der oberen Grenze des zweiten Abstandsbereichs entspricht.

Gemäß einer Weiterbildung der erfindungsgemäßen Vorrichtung detektiert der erste Abstandssensor nur Signale, die oberhalb eines ersten Schwellpegels liegen und der zweite Abstandssensor detektiert nur Signale, die oberhalb eines zweiten Schwellpegels liegen, wobei der erste Schwellpegel höher als der zweite Schwellpegel ist.

Gemäß einer bevorzugten Weiterbildung der erfindungsgemäßen Vorrichtung sind die beiden Abstandssensoren beabstandet zueinander angeordnet, so dass ein von dem ersten Abstandssensor emittiertes Signal, dass an einem Objekt in einem Abstand reflektiert wird, welcher in den zweiten Abstandsbereich fällt, bei dem zweiten Abstandssensor als Signal detektiert wird, dessen Pegel unterhalb des zweiten Schwellpegels liegt. Da der Schwellpegel des zweiten Abstandssensors relativ niedrig gewählt werden muss, kann es passieren, dass der zweite Abstandssensor Reflektionen von Signalen detektiert, die ursprünglich vom ersten Abstandssensor emittiert wurden, sofern diese Signale von Objekten gestreut oder reflektiert wurden, die im Abstandsbereich des zweiten Abstandssensors liegen. Eine derartige Signalkollision auf Grund unterschiedlicher Empfindlichkeiten der Sensoren kann durch die örtliche Trennung der beiden Abstandssensoren vermieden werden. Die Laufzeit des Signals von dem ersten Abstandssensor über ein reflektierendes Objekt zum zweiten Abstandssensor wird auf Grund der örtlichen Trennung der beiden Sensoren so lang, dass der Schallpegel auf einen Wert abgefallen ist, der unterhalb des Schwellpegels für den zweiten Abstandssensor liegt. Dabei sollte jedoch darauf geachtet werden, dass die beiden Abstandssensoren nur so weit voneinander beabstandet angeordnet sind, dass keine Detektionslücke entsteht. Es sollte weiterhin der Nahbereich um das Fahrzeug zumindest im vorderen Vorwärts- und Seitenbereich lückenlos detektiert werden.

Um Signalkollisionen weiter zu vermeiden, können die von den beiden Abstandssensoren emittierten Signale kodierbar sein, insbesondere mittels Pulsweitenmodulation und/oder Amplitudenmodulation. Ferner kann die Sendefrequenz der von den beiden Abstandssensoren emittierten Signale änderbar sein.

Erfindungsgemäß wird ferner eine Parklenk-Assistenz-Vorrichtung für Fahrzeuge bereitgestellt, die die vorstehend beschriebene Vorrichtung zum Erfassen von Objekten umfasst, wobei zumindest im Bereich der beiden vorderen Ecken des Fahrzeugs jeweils ein erster und ein zweiter Abstandssensor angeordnet ist. Ferner ist vorzugsweise bei der Parklenk-Assistenz-Vorrichtung die Vorrichtung zum Erfassen von Objekten mit einer Geschwindigkeitsmesseinrichtung gekoppelt, wobei die Abstandssensoren in Abhängigkeit von der gemessenen Geschwindigkeit aktivierbar sind.

Die Erfindung wird nun an Hand von Ausführungsbeispielen in Bezug zu den Zeichnungen erläutert.
- Figur 1: zeigt schematisch ein Fahrzeug mit mehreren Abstandssensoren für eine Parkdistanzkontrolle und einen Parklenk-Assistenten zusammen mit den Messbereichen dieser Sensoren,
- Figur 2: zeigt schematisch die von den Abstandssensoren emittierten Signale in einer Einparksituation,
- Figur 3: zeigt schematisch die von zwei Objekten reflektierten Signale in der Einparksituation,
- Figur 4: zeigt den Schallpegel in Abhängigkeit von der Zeit, welcher bei einem Abstandssensor bei einer Einparksituation gemäß Figur 3 auftrifft,
- Figur 5: zeigt die in Figur 3 gezeigte Einparksituation zu einem späteren Zeitpunkt,
- Figur 6: zeigt den Schallpegel in Abhängigkeit von der Zeit, der bei den Abstandssensoren bei einer Einparksituation gemäß Figur 5 auftrifft,
- Figur 7: zeigt den Schallpegel in Abhängigkeit von der Zeit, wie in Figur 6, wobei ein Schwellpegel dargestellt ist,
- Figur 8: zeigt den Schallpegel in Abhängigkeit von der Zeit ähnlich wie in Figur 7, wobei der Schwellpegel geändert wurde,
- Figur 9: zeigt einen weiteren Signalverlauf bei einer Einparksituation wie sie in Figur 5 gezeigt ist,
- Figur 10: zeigt den Schallpegel in Abhängigkeit von der Zeit bei einer Einparksituation, wie sie in Figur 9 dargestellt ist,
- die Figuren 11a) und b): veranschaulichen den Signalverlauf von unterschiedlich beabstandeten Sensoren,
- Figur 13: zeigt den Schallpegel in Abhängigkeit von der Zeit bei einer Anordnung der Sensoren, wie sie in Figur 11b) gezeigt ist, und
- die Figuren 13a) und b): veranschaulichen das Auftreten einer Signallücke bei beabstandeten Sensoren.

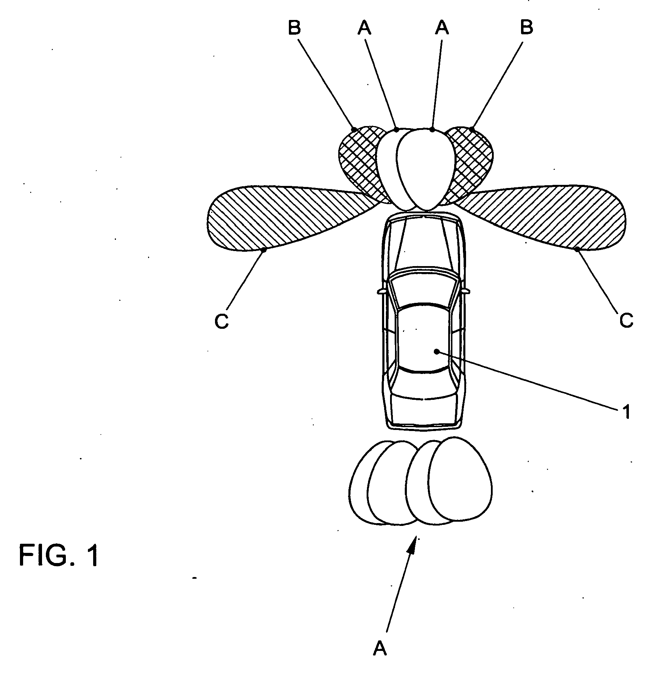

In Figur 1 ist ein Fahrzeug 1 gezeigt, das mit einer Parkdistanzkontrolle und einem Parklenk-Assistenten ausgestattet ist. Das Fahrzeug 1 umfasst im vorderen Bereich sechs Abstandssensoren und im hinteren Bereich vier Abstandssensoren. Bei den Abstandssensoren handelt es sich um identische Ultraschallsensoren. Der Ultraschallsensor emittiert ein Ultraschallsignal. Dieses Ultraschallsignal kann an Objekten, die in der Umgebung des Fahrzeugs 1 erfasst werden sollen, reflektiert oder gestreut werden. Das gestreute Signal kann von dem Ultraschallsensor wieder detektiert werden. An Hand der Laufzeit des Ultraschallsignals kann die Entfernung des Objekts berechnet werden, an dem das Ultraschallsignal reflektiert oder gestreut wurde. Die Winkelinformation, das heißt die relative Lage des Objekts zum Fahrzeug 1, kann aus der Detektion eines weiteren oder mehrerer weiterer Ultraschallsensoren berechnet werden, die beabstandet von dem einen Ultraschallsensor angeordnet sind.

In Figur 1 sind die Bereiche dargestellt, welche von den verschiedenen Ultraschallsensoren erfasst werden können, um Objekte in der Umgebung des Fahrzeugs 1 zu erfassen. Die beiden Ultraschallsensoren vorne in der Mitte des Fahrzeugs und die vier hinteren Ultraschallsensoren erfassen Objekte innerhalb des Bereichs A. Diese Sensoren sind einer Parkdistanzkontrolle zugerordnet. An der vorderen Ecke des Fahrzeugs sind ferner zwei Sensoren angeordnet, die Signale in Richtungen emittieren, die mit der Fahrtrichtung nach außen einen Winkel von ca. 45° einschließen. Der Erfassungsbereich dieser Sensoren ist mit B bezeichnet. Diese beiden Sensoren sind sowohl der Parkdistanzkontrolle als auch einem Parklenk-Assistenten zugeordnet. Ferner besitzt das Fahrzeug vorne zwei Sensoren, die einen seitlichen Bereich C des Fahrzeugs 1 erfassen können. Sie haben eine größere Reichweite als die anderen Sensoren. Diese seitlich emittierenden Sensoren sind nur dem Parklenk-Assistenten zugeordnet.

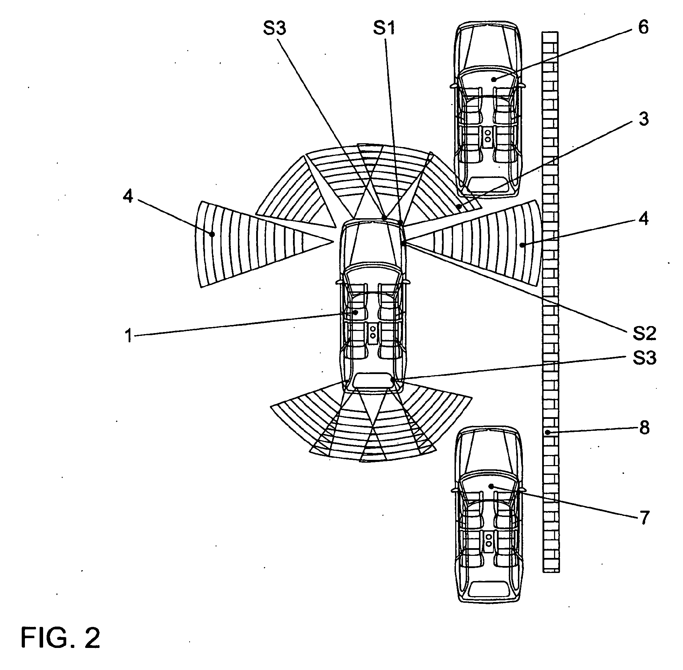

In Figur 2 sind schematisch die Ultraschallsignale dargestellt, welche von den einzelnen Sensoren emittiert werden. Der vordere Sensor S1, dessen Signal 3 in einem Winkel von 45° zur Fahrtrichtung emittiert wird, dient beispielsweise der Erfassung des Fahrzeugs 6, welches eine Parklücke nach vorne abschließt. Mit dem seitlich emittierenden Sensor S2 kann eine Bordsteinkante 8 bei einer Parklücke erfasst werden. Die beiden Sensoren S1 und S2 werden von dem Parklenk-Assistenten verwendet. Schließlich sind noch Sensoren S3 für die Parkdistanzkontrolle vorgesehen. Sie können beispielsweise ein Fahrzeug 7 erfassen, das eine Parklücke nach hinten abschließt.

Der Parklenk-Assistent verwendet die beiden Ultraschallsensoren S1 und S2 (siehe Figur 2) wie folgt:

Das Fahrzeug 1 fährt langsam auf der Fahrbahn an dem Fahrzeug 7, der Parklücke und dem Heck des Fahrzeugs 6 vorbei. Der Parklenk-Assistent ist mit der Geschwindigkeitsmessung des Fahrzeugs 1 verbunden und aktiviert die Sensoren S1 bis S3, wenn eine bestimmte Geschwindigkeit unterschritten wird. Der Geschwindigkeitsbereich, bei dem die Sensoren S1 und S3 aktiviert sind, entspricht den Geschwindigkeiten, die üblicherweise bei der Suche nach einem Parkplatz, beziehungsweise beim Einparkvorgang selbst auftreten. Beim Vorbeifahren an der Parklücke wird dieselbe mittels der Ultraschallsensoren S1 und S2 vermessen. Dabei erfassen die Sensoren S1 und S2 beim Vorbeifahren die Größe der Parklücke und die Entfernung von der Bordsteinkante 8. Da die relative Position des Fahrzeugs 1 zur Parklücke bekannt ist, kann mittels des Parklenk-Assistenten der Einparkvorgang, das heißt die Geschwindigkeitssteuerung und die Lenkwinkelsteuerung vollständig automatisch erfolgen. Zur Sicherheit sind üblicherweise die Sensoren S3 für die Parkdistanzkontrolle aktiviert, um eine Kollision des Fahrzeugs 1 mit anderen Objekten sicher zu vermeiden. Kommt ein Objekt dem Fahrzeug 1 so nah, dass bei der gemessenen Geschwindigkeit eine Kollision zu befürchten ist, stoppt die Parkdistanzkontrolle den Einparkvorgang.

Bei dem Parklenk-Assistenten ergibt sich das Problem, dass es möglicherweise zu einer Signalkollision der Signale 3 und 4 der Sensoren S1 und S2 kommen kann. Im Folgenden wird daher ein Verfahren und eine Vorrichtung beschrieben, mit der eine solche Signalkollision verhindert werden kann. Dieses Verfahren und diese Vorrichtung sind nicht nur bei einem Parklenk-Assistenten einsetzbar, sondern immer dann, wenn Objekte von zwei Abstandssensoren erfasst werden sollen. Die Ultraschallsensoren S1 und S2 werden im Folgenden als Beispiel für die beiden Abstandssensoren verwendet.

Den beiden Ultraschallsensoren S1 und S2 ist jeweils eine Steuereinrichtung zugeordnet. Ferner könnte auch eine einzige Steuereinrichtung die beiden Ultraschallsensoren S1 und S2 und gegebenenfalls noch weitere Ultraschallsensoren ansteuern. Die Steuereinrichtungen regen die Ultraschallsensoren S1 und S2 so an, dass zu einem bestimmten Zeitpunkt jeweils ein Signal vorzugsweise gleichzeitig emittiert wird und innerhalb eines späteren Zeitintervalls ein reflektiertes und/oder gestreutes Signal detektiert wird.

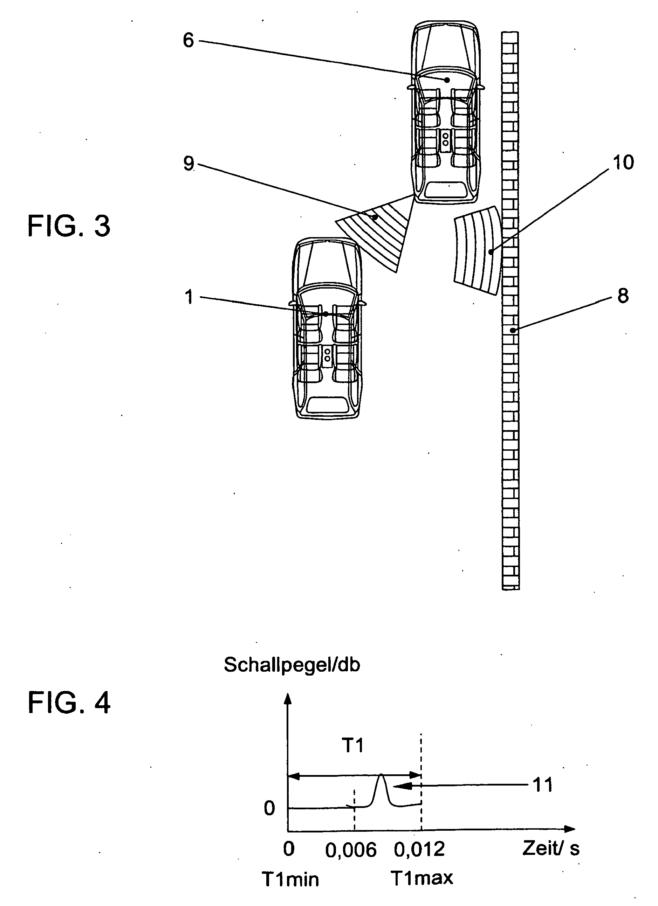

Beispielsweise wird das von dem Ultraschallsensor S1 emittierte Signal 3 (Figur 2) an der hinteren linken Ecke des Fahrzeugs 6 als Reflektionssignal 9 in Richtung des Sensors S1 des Fahrzeugs 1 reflektiert (Figur 3). Die Ultraschallsignale 3 und 9 breiten sich mit Schallgeschwindigkeit aus. Bei 20°C ist die Schallgeschwindigkeit ca. 343,42 m/s. Die Ultraschallsensoren sind mit einer Temperaturmessung gekoppelt, um die Schallgeschwindigkeit, die von der Temperatur abhängt, jeweils aktuell ermitteln zu können. Aus der Länge des Zeitintervalls von der Emission des Ultraschallsignals 3 bis zur Detektion des reflektierten Signals 9 ergibt sich die Laufzeit des Ultraschallsignals und nach Multiplikation mit der Schallgeschwindigkeit das Doppelte der Entfernung des Objektes, an dem das Ultraschallsignal gestreut wurden.

In Figur 4 ist der Schallpegel in Abhängigkeit von der Zeit dargestellt, wenn die Sensoren S1 und S2 die Ultraschallsignale 3 und 4 (Figur 2) emittieren. In Figur 4 ist nur ein Zeitintervall von T1 von dem Zeitpunkt T1min bis T1 max berücksichtigt. Dieses Zeitintervall T1 entspricht Signalen, deren Laufzeit kleiner als die Laufzeit ist, welche einer Reflektion des emittierten Signals an einem Objekt in einem Abstand entspricht, welcher der oberen Grenze T1 max des Abstandsbereichs des Ultraschallsensors S1 entspricht. In dem gezeigten Beispiel ist der Abstandsbereich des Sensors S1 zwei Meter, das heißt, das Ultraschallsignal kann sich über vier Meter fortpflanzen. Dies entspricht einer Laufzeit von ca. 0,012 Sekunden. Die Steuereinrichtung des Ultraschallsensors S2 steuert diesen so an, dass nur Signale detektiert werden, die innerhalb von 0,012 Sekunden nach der Emission des Signals 3 detektiert werden. Die untere Grenze T1min des Zeitintervalls T1 könnte im Übrigen auch größer Null sein, so dass in diesem Fall nur Signale detektiert werden würden, die zwischen den Zeitpunkten T1 min und T1 max auf den Ultraschallsensor S1 auftreffen. Der Sensor S1 detektiert das an der linken hinteren Ecke des Fahrzeugs 6 reflektierte Ultraschallsignal 9 an Hand des Peaks 11, der, wie aus Figur 4 ersichtlich, innerhalb des Zeitintervalls T1 auftritt.

Gleichzeitig mit der Emission des Signals 3 durch den Ultraschallsensor S1 emittiert auch der Ultraschallsensor S2 ein Signal 4 seitlich nach außen. Dieses Signal 4 trifft auf eine Bordsteinkante 8 auf und wird von dieser zurück zum Fahrzeug 1 reflektiert. Da die Bordsteinkante 8 jedoch weiter entfernt ist, ist das rückgesteuerte Signal im Zeitintervall T1 noch nicht bei den Sensoren des Fahrzeugs 1 angekommen. In Figur 3 ist der Zustand der Signale 9 und 10 (Figur 3) zum Zeitpunkt T1 max dargestellt.

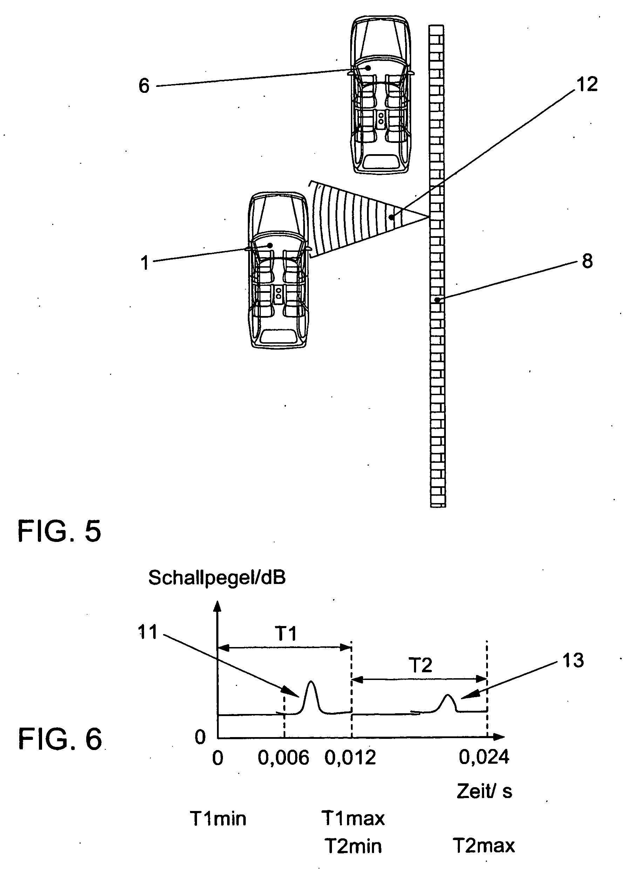

In Figur 5 ist der Zustand der Signale zu einem späteren Zeitpunkt dargestellt. Das an der Bordsteinkante 8 gestreute Signal 12, welches ursprünglich von dem Sensor S2 emittiert wurde, ist wieder beim Sensor S2 angekommen und wird von dem Sensor S2 detektiert. Der Sensor S2 wird von der Steuereinrichtung so angesteuert, dass er nur Signale detektiert, deren Laufzeit größer als die Laufzeit ist, welche einer Reflektion an einem Objekt in einem Abstand entspricht, welcher der unteren Grenze des Abstandsbereichs des Sensors S2 oder welcher der oberen Grenze des Abstandsbereichs des Sensors S1 entspricht. Im vorliegenden Fall fällt die untere Grenze des Abstandsbereichs des Sensors S2 mit der oberen Grenze des Abstandsbereichs des Sensors S1 zusammen. Ferner steuert die Steuereinrichtung den Ultraschallsensor S2 so an, dass er nur Signal detektiert, deren Laufzeit kleiner als die Laufzeit ist, welche einer Reflektion des emittierten Signals an einem Objekt einem Abstand entspricht, welcher der oberen Grenze des Abstandsbereichs des Sensors S2 entspricht. Dies ist in Figur 6 veranschaulicht. Der Sensor S1 misst Signale in dem Zeitintervall T1, der Sensor S2 misst Signale in dem sich anschließenden Zeitintervall T2. Das Zeitintervall T2 reicht von dem Zeitpunkt T2min bis zum Zeitpunkt T2max. Der Abstandsbereich des Sensors S2 reicht beispielsweise von zwei Metern bis vier Meter. Hieraus ergibt sich für den Zeitpunkt T2min ca. 0,012 Sekunden und für den Zeitpunkt T2max ca. 0,024 Sekunden. Auf Grund der unterschiedlichen Laufzeiten der Signale, die von den beiden Sensoren S1 und S2 detektiert werden, kann eine Signalkollision verhindert werden.

Da die Bordsteinkante 8 mehr als zwei Meter und weniger als vier Meter von dem Sensor S2 entfernt ist, detektiert der Sensor S2 den Peak 13, wie er in Figur 6 dargestellt ist.

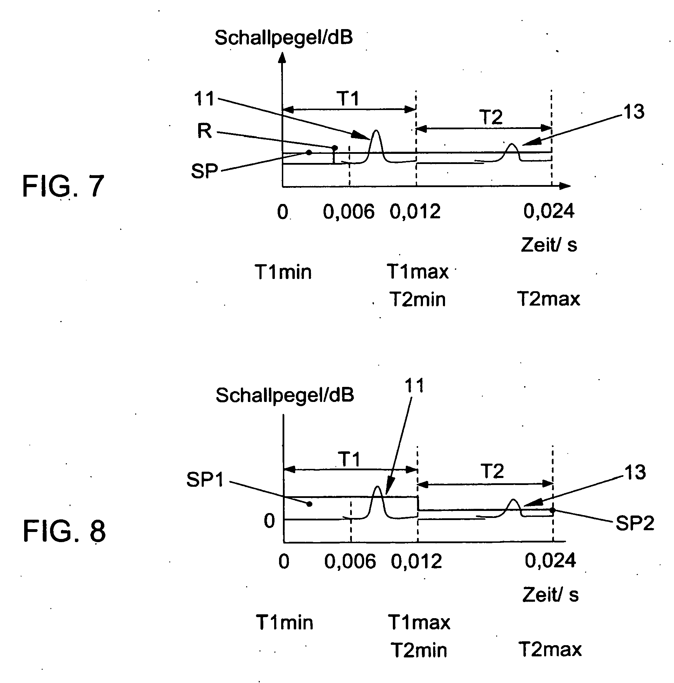

Problematisch bei Ultraschallsensoren ist, dass sich aus den Umweltbedingungen Störungen oder Rauschsignale ergeben können. Es soll verhindert werden, dass derartige Störsignale als Objekt in der Umgebung des Fahrzeugs 1 interpretiert werden. In Figur 7 ist ein solches Störsignal R dargestellt. Um Störsignale und ein Rauschen zu verhindern, wird die Empfindlichkeit der Sensoren so eingestellt, dass nur Signale detektiert werden, die oberhalb eines Schwellpegels SP (Figur 7) liegen.

Bei der Verwendung von zwei Sensoren S1 und S2, die für die Erfassung von Objekten in unterschiedlichen, insbesondere disjunkten, Abstandsbereichen vorgesehen sind, ergibt sich das Problem, dass Signale, die von Objekten in einer größeren Entfernung reflektiert worden sind, einen niedrigeren Signalpegel aufweisen. Aus diesem Grund kann entweder der Sensor S2 der für Objekte in größerer Entfernung bestimmt ist, Signale mit einer höheren Intensität emittieren, oder die Empfindlichkeit dieses Sensors, das heißt der Schwellpegel, wird so abgesenkt, dass ein Objekt an der äußeren Abstandsbereichsgrenze noch detektiert wird. Wenn die Empfindlichkeit, das heißt der Schwellpegel SP für die beiden Sensoren S1 und S2 gleich gewählt wird, wie es in Figur 7 dargestellt ist, kann es außerdem passieren, dass ein Störsignal R von einem relativ nahen Objekt den Schwellpegel SP überschreitet und von dem Ultraschallsensor S1 detektiert wird. Um dies zu verhindern, wird der Schwellpegel SP1 für den Ultraschallsensor S1 höher gewählt als der Schwellpegel SP2 für den Ultraschallsensor S2. Diese Situation in Figur 8 dargestellt. Das Störsignal R wird in diesem Fall von dem Ultraschallsensor S1 nicht mehr detektiert, da es unterhalb des Schwellpegels SP1 liegt. Die Peaks 11 beziehungsweise 13 werden jedoch weiterhin von den Ultraschallsensoren S1 beziehungsweise S2 detektiert, da ihre Spitzen oberhalb der Schwellpegel SP1 beziehungsweise SP2 liegen. Es erfolgt somit für Sensoren mit einem größeren Abstandsbereich eine Schwellwertabsenkung in Abhängigkeit von der Laufzeit der zu detektierenden Signale.

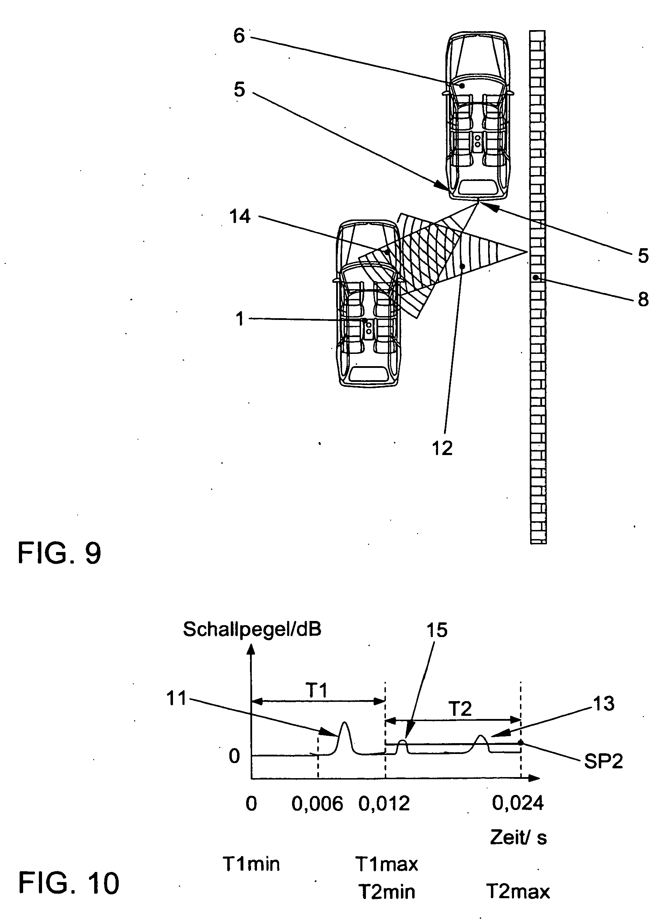

In das Zeitintervall T2, in welchem der Sensor S2 mit dem größeren Abstandsbereich Signale detektiert, könnte es jedoch zu einer Signalkollision kommen, wie sie in den Figuren 9 und 10 veranschaulicht ist.

In einem Abstand, der im Abstandsbereich des Ultraschallsensors S2 liegt, ist ein Objekt, z.B. eine Anhängerkupplung 5 des Fahrzeugs 6 angeordnet. Das ursprünglich von dem Ultraschallsensor S1 emittierte Signal wird an dieser Anhängerkupplung 5 reflektiert und gelangt von dort zu dem Ultraschallsensor S2. Da die Laufzeit dieses Signals 14 innerhalb des Zeitintervalls T2 für den Ultraschallsensor S2 liegt, wird es wie in Figur 10 dargestellt, als Peak 15 detektiert. Ferner wird, wie bereits in Figur 8 gezeigt, das ursprünglich von dem Ultraschallsensor S2 emittierte Signal 12, welches an der Bordsteinkante 8 reflektiert wurde, als Peak 13 detektiert. Würde der Ultraschallsensor S2 beziehungsweise die Steuereinrichtung dieses Sensors den Peak 15 als Objekt, das sich in einem entsprechenden Abstand von dem Sensor S2 befindet, interpretiert, ergäbe sich ein Fehler, da die Ultraschallsensoren S1 und S2 beabstandet voneinander angeordnet sind und die Steuereinrichtung des Ultraschallsensors S2 die Laufzeit daher falsch berechnen würde. Es ist nämlich nicht möglich, zu unterscheiden, ob ein detektiertes Signal ursprünglich von dem Ultraschallsensor S1 oder dem Ultraschallsensor S2 emittiert worden ist, da es sich um identische Abstandssensoren handelt, die gleichartige Signal emittieren.

Um eine derartige Situation zu vermeiden, wird der Abstand zwischen den beiden Ultraschallsensoren S1 und S2 für den Abstandsbereich der beiden Sensoren optimiert. Der Abstand wird so gewählt, dass ein von dem Ultraschallsensor S1 emittiertes Signal, das an einem Objekt in einem Abstand reflektiert wird, welcher in dem Abstandsbereich des Ultraschallsensors S2 fällt, bei dem Ultraschallsensor S2 als Signal detektiert wird, dessen Pegel unterhalb des Schwellwerts SP2 für den zweiten Ultraschallsensor S2 liegt.

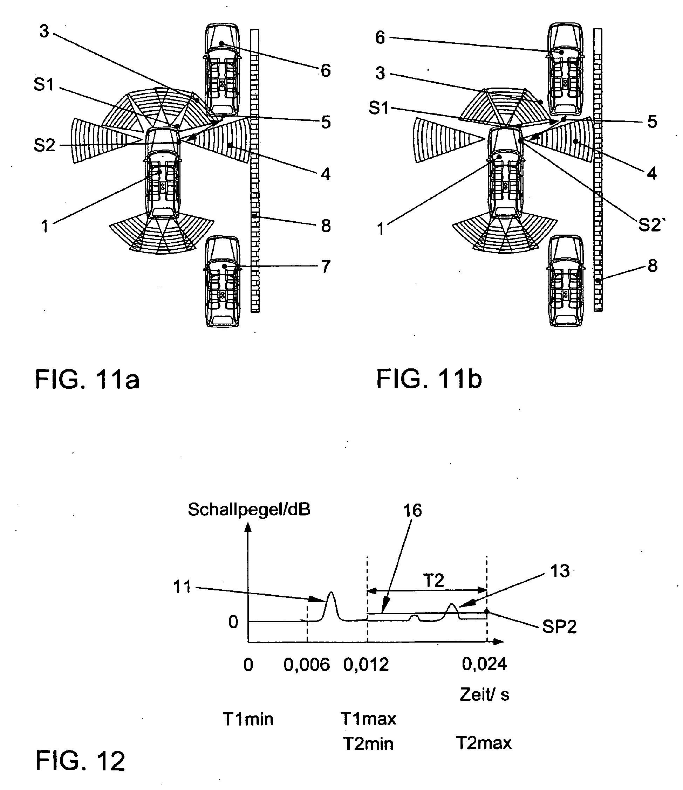

In Figur 11a) ist eine Anordnung dargestellt, bei welcher die Ultraschallsensoren S1 und S2 nah beieinander angeordnet sind, in Figur 11b) ist eine Anordnung dargestellt, bei dem die Ultraschallsensoren S1 und S2' weiter entfernt voneinander angeordnet sind. Durch die Pfeile sind jeweils die Laufwege der Signale dargestellt, die von dem Ultraschallsensor S1 emittiert wurden, an der Anhängerkupplung 5 reflektiert wurden und von dem anderen Ultraschallsensor S2 beziehungsweise S2' detektiert wurden. Bei der Anordnung der Figur 11a) ergibt sich ein Schallpegelverlauf, wie er in Figur 10 dargestellt ist, bei dem der Abstand des Objekts, welches zu dem Peak 15 gehört, fehlerhaft berechnet werden würde. In Figur 12 ist der Schallpegelverlauf dargestellt, welcher der Anordnung der Ultraschallsensoren S1 und S2' der Figur 11 b) entspricht. In diesem Fall ist der Weg des Schallsignals vom Sender über den Reflektor zum Empfänger länger als bei der Anordnung, wie sie in Figur 11a) dargestellt ist. Bei dem Ultraschallsensor S2' wird daher der Peak 16 zu einem späteren Zeitpunkt detektiert. Auf Grund der längeren Laufzeit hat er jedoch auch einen niedrigeren Pegel, so dass er unterhalb des Schwellpegels SP2 für den zweiten Ultraschallsensor S2' liegt. Die Wahl des Schwellpegels für den Ultraschallsensor S2' mit dem weiteren Abstandsbereich und der Abstand zwischen den beiden Ultraschallsensoren S1 und S2' wird daher so gewählt, dass von dem zweiten Ultraschallsensor S2' keine Peaks detektiert werden, aus denen ein fehlerhafter Abstand eines Objekts berechnet werden würde.

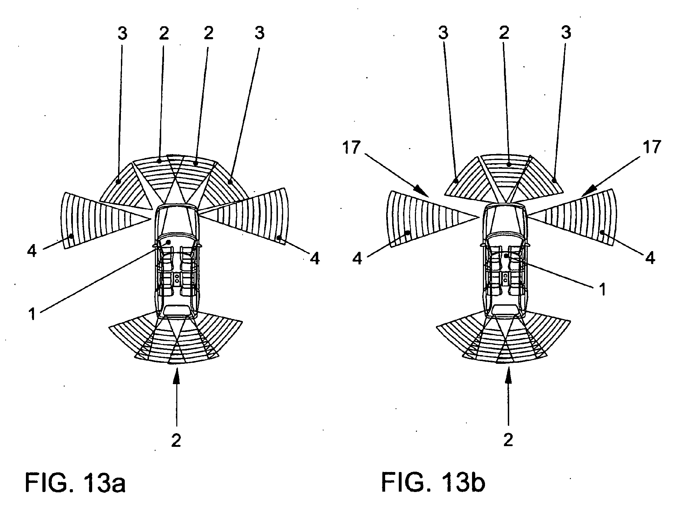

Gleichermaßen ist jedoch auch darauf zu achten, dass sich keine Detektionslücken 17 ergeben. Dies ist in Figur 13 dargestellt. Figur 13a) zeigt eine lückenlose Detektion von Objekten in der Umgebung der Vorderseite, und der Rückseite des Fahrzeugs 1. Figur 13b) zeigt, dass zwischen den Signalen 3 und 4 sich eine Detektionslücke 17 ergibt, innerhalb derer kein Objekt erfasst werden würde. Es wird darauf hingewiesen, dass der Abstand der Sensoren S1 und S2' wie in Figur 11 b) dargestellt ist, übertrieben dargestellt ist, um den Unterschied der Laufzeiten im Vergleich zu der Darstellung der Figur 11a) besser veranschaulichen zu können. Auch in dem in Figur 11 b) gezeigten Fall sollte sich keine Detektionslücke ergeben.

Um Signalkollisionen noch besser verhindern zu können, ist es möglich die beschriebenen Maßnahmen zum Vermeiden der Signalkollision mit weiteren Maßnahmen zu kombinieren. Insbesondere folgende Maßnahmen wären möglich:

Es kann ein grundsätzlicher Ausschluss der Funktionen der Abstandssensoren, für die eine Signalkollision zu befürchten ist, erreicht werden. Beispielsweise kann der Fahrer des Fahrzeugs 1 über eine geeignete Schnittstelle bestimmte Sensoren beziehungsweise die diesen Sensoren zugeordneten Funktionen abschalten.

Ferner könnten die Schallwellen zum Beispiel über Pulsweitenmodulation oder Amplitudenmodulation sowie deren Varianten und Kombinationen kodiert werden.

Des Weiteren könnte die Sendefrequenz der Abstandssensoren geändert werden. Die Sensoren können innerhalb des Ultraschallspektrums eine jeweils andere Frequenz bekommen. Dies beeinflusst die Charakteristik der Schallkeule, was bei der Konstruktion bzw. Anordnung der Sensoren berücksichtigt werden müsste.

Die Abstandssensoren könnten zeitversetzt senden. Jeder Sensor sendet einzeln. Die reflektierten oder gestreuten Signale können jedoch in einer Gruppe empfangen werden, um den Ort der Reflektion bestimmen zu können. Diese Maßnahme setzt jedoch voraus, dass die Abstandssensoren für die gleiche maximale Entfernungsmessung ausgelegt sind.

Die einzelnen Funktionen, denen die Abstandssensoren zugeordnet sind, können priorisiert werden. Das heißt, Funktionen mit unterschiedlichen Genauigkeitsanforderungen können abwechselnd senden und empfangen, wobei jedoch die Funktion mit höherer Genauigkeitsanforderung mit einer höheren Häufigkeit innerhalb eines Zeitfensters betrieben wird.

### Bezugszeichenliste

- 1: Fahrzeug
- 2: Signal eines Ultraschallsensors für die Parkdistanzkontrolle
- 3: Signal eines Sensors für die Parkdistanzkontrolle und für den Parklenk-Assistenten
- 4: Signal eines Ultraschallsensors für den Parklenk- Assistenten
- 5: Anhängerkupplung
- 6: Fahrzeug
- 7: Fahrzeug
- 8: Bordsteinkante
- 9: reflektiertes Signal
- 10: reflektiertes Signal
- 11: Signalpeak
- 12: reflektiertes Signal
- 13: Signalpeak
- 14: gestreutes Signal
- 15: Signalpeak
- 16: Signalpeak
- 17: Detektionslücke

## Patentansprüche

1. Verfahren zum Erfassen von Objekten (6, 7, 8), insbesondere in der Umgebung eines Fahrzeugs (1), bei dem Objekte (6, 7, 8) in einem ersten Abstandsbereich mittels eines ersten Abstandssensors (S1) und Objekte (6, 7, 8) in einem zweiten Abstandsbereichs mittels eines zweiten Abstandssensors (S2) detektiert werden, wobei die beiden Abstandsbereiche nicht identisch sind und die obere Grenze des zweiten Abstandsbereichs weiter entfernt als die obere Grenze des ersten Abstandsbereichs ist, **gekennzeichnet durch** die folgenden Schritte,
die beiden Abstandssensoren (S1, S2) emittieren jeweils zu einem Zeitpunkt ein gleichartiges Signal (3, 4),
der erste Abstandssensor (S1) detektiert reflektierte und/oder gestreute Signale, deren Laufzeit kleiner als die Laufzeit ist, welche einer Reflektion eines emittierten Signals an einem Objekt (6) in einem Abstand entspricht, welcher der oberen Grenze des ersten Abstandsbereichs entspricht, und
der zweite Abstandssensor (S2) detektiert reflektierte und/oder gestreute Signale, deren Laufzeit größer als die Laufzeit ist, welcher einer Reflektion an einem Objekt (8) in einem Abstand entspricht, welcher größer oder gleich der oberen Grenze des ersten Abstandsbereichs ist, und deren Laufzeit kleiner als die Laufzeit ist, welche einer Reflektion des emittierten Signals an einem Objekt (8) in einem Abstand entspricht, welcher der oberen Grenze des zweiten Abstandsbereichs entspricht.

2. Verfahren nach Anspruch 1, **dadurch gekennzeichnet, dass** die Signale Schallwellen sind.

3. Verfahren nach Anspruch 1 oder 2, **dadurch gekennzeichnet, dass** der erste Abstandssensor (S1) reflektierte oder gestreute Signale detektiert, deren Laufzeit größer als die Laufzeit ist, welche einer Reflektion des emittierten Signals an einem Objekt (6) in einem Abstand entspricht, welcher der unteren Grenze des ersten Abstandsbereichs entspricht.

4. Verfahren nach einem der vorhergehenden Ansprüche, **dadurch gekennzeichnet, dass** der erste Abstandssensor (S1) nur Signale detektiert, die oberhalb eines ersten Schwellpegels (SP1) liegen, und der zweite Abstandssensor (S2) nur Signale detektiert, die oberhalb eines zweiten Schwellpegels (SP2) liegen, wobei der erste Schwellpegel (SP1) höher als der zweite Schwellpegel (SP2) ist.

5. Verfahren nach einem der vorhergehenden Ansprüche, **dadurch gekennzeichnet, dass** die beiden Abstandsbereiche disjunkt sind.

6. Verfahren nach einem der vorhergehenden Ansprüche, **dadurch gekennzeichnet, dass** die von den beiden Abstandssensoren (S1, S2) emittierten Signale kodiert werden.

7. Verfahren nach einem der vorhergehenden Ansprüche, **dadurch gekennzeichnet, dass** die von den beiden Abstandssensoren emittierten Signale mittels Pulsweitenmodulation und/oder Amplitudenmodulation kodiert werden.

8. Verfahren nach einem der vorhergehenden Ansprüche, **dadurch gekennzeichnet, dass** die Sendefrequenz der emittierten Signale verändert wird.

9. Verfahren nach einem der vorhergehenden Ansprüche, **dadurch gekennzeichnet, dass** eine Geschwindigkeit gemessen wird und die Abstandssensoren (S1, S2) in Abhängigkeit von der gemessenen Geschwindigkeit aktiviert werden.

10. Verfahren nach einem der vorhergehenden Ansprüche, **dadurch gekennzeichnet, dass** die beiden Abstandssensoren (S1, S2) die Signale gleichzeitig emittieren.

11. Vorrichtung zum Erfassung von Objekten (6, 7, 8), insbesondere in der Umgebung eines Fahrzeugs (1) mit
zumindest einem ersten Abstandssensor (S1) für Objekte (6) in einem ersten Abstandsbereich, und einem zweiten Abstandssensor (S2) für Objekte (8) in einem zweiten Abstandsbereich,
wobei die beiden Abstandsbereiche nicht identisch sind und die obere Grenze des zweiten Abstandsbereichs weiter entfernt als die obere Grenze des ersten Abstandsbereichs ist, und
einer oder mehreren Steuereinrichtung(en), mit welcher/welchen die beiden Abstandssensoren (S1, S2) so ansteuerbar sind, dass sie jeweils zu einem Zeitpunkt ein gleichartiges Signal emittieren und innerhalb eines späteren Zeitintervalls (T1, T2) ein reflektiertes und/oder gestreutes Signal detektieren,
**dadurch gekennzeichnet,**
**dass** der erste Abstandssensor (S1) von der Steuereinrichtung so steuerbar ist, dass er nur Signale detektiert, deren Laufzeit kleiner als die Laufzeit ist, welche einer Reflektion des emittierten Signals an einem Objekt (6) in einem Abstand entspricht, welcher der oberen Grenze des ersten Abstandsbereichs entspricht, und
**dass** der zweite Abstandssensor (S2) von der Steuereinrichtung so steuerbar ist, dass er nur Signale detektiert, deren Laufzeit größer als die Laufzeit ist, welche einer Reflektion des emittierten Signals an einem Objekt (8) in einem Abstand entspricht, welcher größer oder gleich der oberen Grenze des ersten Abstandsbereichs ist, und deren Laufzeit kleiner als die Laufzeit ist, welche einer Reflektion des emittierten Signals an einem Objekt (8) in einem Abstand entspricht, welcher der oberen Grenze des zweiten Abstandsbereichs entspricht.

12. Vorrichtung nach Anspruch 11, **dadurch gekennzeichnet, dass** die beiden Abstandssensoren (S1, S2) Ultraschallsensoren sind.

13. Vorrichtung nach Anspruch 11 oder 12, **dadurch gekennzeichnet, dass** der erste Abstandssensor (S1) von der Steuereinrichtung so steuerbar ist, dass er nur Signal detektiert, deren Laufzeit größer als die Laufzeit ist, welche einer Reflektion des emittierten Signals an einem Objekt (6) in einem Abstand entspricht, welcher der unteren Grenze des ersten Abstandsbereichs entspricht.

14. Vorrichtung nach einem der Ansprüche 11 bis 13, **dadurch gekennzeichnet, dass** der erste Abstandssensor (S1) nur Signale detektiert, die oberhalb eines ersten Schwellpegels (SP1) liegen, und der zweite Abstandssensor (S2) nur Signale detektiert, die oberhalb eines zweiten Schallpegels (SP2) liegen, wobei der erste Schwellpegel (SP1) höher als der zweite Schwellpegel (SP2) ist.

15. Vorrichtung nach Anspruch 14, **dadurch gekennzeichnet, dass** die beiden Abstandssensoren (S1, S2) beabstandet zueinander angeordnet sind, so dass ein von dem ersten Abstandssensor (S1) emittiertes Signal, das an einem Objekt in einem Abstand reflektiert wird, welcher in den zweiten Abstandsbereich fällt, bei dem zweiten Abstandssensor (S2) als Signal detektiert wird, dessen Pegel unterhalb des zweiten Schwellpegels (SP2) liegt.

16. Vorrichtung nach einem der Ansprüche 11 bis 15, **dadurch gekennzeichnet, dass** der zweite Abstandssensor (S2) von der Steuervorrichtung so angesteuert wird, dass er nur Signale detektiert, deren Laufzeit größer als die Laufzeit ist, welche einer Reflektion an einem Objekt in einem Abstand entspricht, welcher der oberen Grenze des Abstandsbereichs des ersten Abstandssensors (S1) entspricht, sodass die beiden Abstandsbereiche disjunkt sind.

17. Vorrichtung nach einem der Ansprüche 11 bis 16, **dadurch gekennzeichnet, dass** die von den beiden Abstandssensoren (S1, S2) emittierten Signale kodierbar sind.

18. Vorrichtung nach einem der Ansprüche 11 bis 17, **dadurch gekennzeichnet, dass** die von den beiden Abstandssensoren (S1, S2) emittierten Signale mittels Pulsweitenmodulation und/oder Amplitudenmodulation kodierbar sind.

19. Vorrichtung nach einem der Ansprüche 11 bis 18, **dadurch gekennzeichnet, dass** die Sendefrequenz der von den beiden Abstandssensoren (S1, S2) emittierten Signale änderbar ist.

20. Parklenk-Assistenz-Vorrichtung für Fahrzeuge, **gekennzeichnet durch** eine Vorrichtung zum Erfassen von Objekten nach einem der Ansprüche 11 bis19, wobei zumindest im Bereich der beiden vorderen Ecken des Fahrzeugs jeweils ein erster und zweiter Abstandssensor (S1, S2) angeordnet sind.

21. Vorrichtung nach Anspruch 20, **dadurch gekennzeichnet, dass** die Vorrichtung zum Erfassen von Objekten mit einer Geschwindigkeitsmesseinrichtung gekoppelt ist und die Abstandssensoren (S1, S2) in Abhängigkeit von der gemessenen Geschwindigkeit aktivierbar sind.

## Claims

1. Method for detecting objects (6, 7, 8), in particular in the vicinity of a vehicle (1), in which objects (6, 7, 8) are detected in a first distance range by means of a first distance sensor (S1), and objects (6, 7, 8) are detected in a second distance range by means of a second distance sensor (S2), wherein the two distance ranges are not identical, and the upper limit of the second distance range is further away than the upper limit of the first distance range, **characterized by** the following steps:
the two distance sensors (S1, S2) each emit an identical signal (3, 4) at one time,
the first distance sensor (S1) detects reflected and/or scattered signals whose transit time is shorter than the transit time which corresponds to a reflection of an emitted signal at an object (6) at a distance which corresponds to the upper limit of the first distance range, and
the second distance sensor (S2) detects reflected and/or scattered signals whose transit time is longer than the transit time which corresponds to a reflection at an object (8) at a distance which is longer than or equal to the upper limit of the first distance range and whose transit time is shorter than the transit time which corresponds to a reflection of the emitted signal at an object (8) at a distance which corresponds to the upper limit of the second distance range.

2. Method according to Claim 1, **characterized in that** the signals are sound waves.

3. Method according to Claim 1 or 2, **characterized in that** the first distance sensor (S1) detects reflected or scattered signals whose transit time is longer than the transit time which corresponds to a reflection of the emitted signal at an object (6) at a distance which corresponds to the lower limit of the first distance range.

4. Method according to one of the preceding claims, **characterized in that** the first distance sensor (S1) detects only signals which are above a first sound level (SP1), and the second distance sensor (S2) detects only signals which are above a second sound level (SP2), wherein the first sound level (SP1) is higher than the second sound level (SP2).

5. Method according to one of the preceding claims, **characterized in that** the two distance ranges are disjunctive.

6. Method according to one of the preceding claims, **characterized in that** the signals emitted by the two distance sensors (S1, S2) are encoded.

7. Method according to one of the preceding claims, **characterized in that** the signals emitted by the two distance sensors are encoded by means of pulse width modulation and/or amplitude modulation.

8. Method according to one of the preceding claims, **characterized in that** the transmission frequency of the emitted signals is changed.

9. Method according to one of the preceding claims, **characterized in that** a speed is measured and the distance sensors (S1, S2) are activated as a function of the measured speed.

10. Method according to one of the preceding claims, **characterized in that** the two distance sensors (S1, S2) emit the signals simultaneously.

11. Device for detecting objects (6, 7, 8), in particular in the vicinity of a vehicle (1), having
at least a first distance sensor (S1) for objects (6) in a first distance range, and a second distance sensor (S2) for objects (8) in a second distance range,
wherein the two distance ranges are not identical and the upper limit of the second distance range is further away than the upper limit of the first distance range, and
one or more control devices with which the two distance sensors (S1, S2) can be actuated in such a way that they each emit an identical signal at one time and detect a reflected and/or scattered signal within a later time interval (T1, T2),
**characterized**
**in that** the first distance sensor (S1) can be controlled by the control device in such a way that it detects only signals whose transit time is shorter than the transit time which corresponds to a reflection of the emitted signal at an object (6) at a distance which corresponds to the upper limit of the first distance range,
and
**in that** the second distance sensor (S2) can be controlled by the control device in such a way that it detects only signals whose transit time is longer than the transit time which corresponds to a reflection of the emitted signal at an object (8) at a distance which is longer than or equal to the upper limit of the first distance range and whose transit time is shorter than the transit time which corresponds to a reflection of the emitted signal at an object (8) at a distance which corresponds to the upper limit of the second distance range.

12. Device according to Claim 11, **characterized in that** the two distance sensors (S1, S2) are ultrasonic sound sensors.

13. Device according to Claim 11 or 12, **characterized in that** the first distance sensor (S1) can be controlled by the control device in such a way that it detects only signals whose transit time is longer than the transit time which corresponds to a reflection of the emitted signal at an object (6) at a distance which corresponds to the lower limit of the first distance range.

14. Device according to one of Claims 11 to 13, **characterized in that** the first distance sensor (S1) detects only signals which are above a first sound level (SP1), and the second distance sensor (S2) detects only signals which are above a second sound level (SP2), wherein the first sound level (SP1) is higher than the second sound level (SP2).

15. Device according to Claim 14, **characterized in that** the two distance sensors (S1, S2) are arranged spaced apart from one another, with the result that a signal emitted by the first distance sensor (S1) which is reflected at an object at a distance which is included in the second distance range, and in the case of the second distance sensor (S2) is detected as a signal whose level is below the second sound level (SP2).

16. Device according to one of Claims 11 to 15, **characterized in that** the second distance sensor (S2) is actuated by the control device in such a way that it detects only signals whose transit time is longer than the transit time which corresponds to a reflection at an object at a distance which corresponds to the upper limit of the distance range of the first distance sensor (S1), with the result that the two distance ranges are disjunctive.

17. Device according to one of Claims 11 to 16, **characterized in that** the signals emitted by the two distance sensors (S1, S2) can be encoded.

18. Device according to one of Claims 11 to 17, **characterized in that** the signals emitted by the two distance sensors (S1, S2) can be encoded by means of pulse width modulation and/or amplitude modulation.

19. Device according to one of Claims 11 to 18, **characterized in that** the transmission frequency of the signals emitted by the two distance sensors (S1, S2) can be changed.

20. Parking steering assistance device for vehicles, **characterized by** a device for detecting objects according to one of Claims 11 to 19, wherein in each case a first and a second distance sensor (S1, S2) are arranged at least in the vicinity of the two front corners of the vehicle.

21. Device according to Claim 20, **characterized in that** the device for detecting objects is coupled to a speed-measuring device, and the distance sensors (S1, S2) can be activated as a function of the measured speed.

## Revendications

1. Procédé destiné à la détection d'objets (6, 7, 8), notamment dans l'environnement d'un véhicule (1), dans lequel les objets (6, 7, 8) situés dans une première plage de distance sont détectés à l'aide d'un premier capteur de distance (S1) et les objets (6, 7, 8) situés dans une deuxième plage de distance sont détectés à l'aide d'un deuxième capteur de distance (S2), les deux plages de distance n'étant pas identiques et la limite supérieure de la deuxième plage de distance étant davantage éloignée que la limite supérieure de la première plage de distance ; **caractérisé par** les étapes suivantes :
les deux capteurs de distance (S1, S2) émettent respectivement à un moment précis un signal (3, 4) similaire ;
le premier capteur de distance (S1) détecte des signaux réfléchis et/ou déviés dont la durée de parcours est inférieure à la durée de parcours correspondant à une réflexion d'un signal émis au niveau d'un objet (6) placé à une distance correspondant à la limite supérieure de la première plage de distance ; et
le deuxième capteur de distance (S2) détecte des signaux réfléchis et/ou déviés dont la durée de parcours est supérieure à la durée de parcours correspondant à une réflexion au niveau d'un objet (8) placé à une distance supérieure ou égale à la limite supérieure de la première plage de distance et dont la durée de parcours est inférieure à la durée de parcours correspondant à une réflexion du signal émis au niveau d'un objet (8) placé à une distance correspondant à la limite supérieure de la deuxième plage de distance.

2. Procédé selon la revendication 1, **caractérisé en ce que** les signaux sont des ondes acoustiques.

3. Procédé selon la revendication 1 ou 2, **caractérisé en ce que** le premier capteur de distance (S1) détecte les signaux réfléchis ou déviés dont la durée de parcours est supérieure à la durée de parcours correspondant à une réflexion du signal émis au niveau d'un objet (6) placé à une distance correspondant à la limite inférieure de la première plage de distance.

4. Procédé selon l'une quelconque des revendications précédentes, **caractérisé en ce que** le premier capteur de distance (S1) ne détecte que les signaux qui se situent au-dessus d'un premier niveau seuil (SP1) et que le deuxième capteur de distance (S2) ne détecte que les signaux qui se situent au-dessus d'un deuxième niveau seuil (SP2), le premier niveau seuil (SP1) étant supérieur au deuxième niveau seuil (SP2).

5. Procédé selon l'une quelconque des revendications précédentes, **caractérisé en ce que** les deux plages de distance sont disjointes.

6. Procédé selon l'une quelconque des revendications précédentes, **caractérisé en ce que** les signaux émis par les deux capteurs de distance (S1, S2) sont codés.

7. Procédé selon l'une quelconque des revendications précédentes, **caractérisé en ce que** les signaux émis par les deux capteurs de distance sont codés par modulation de la largeur de pulsation et/ou par modulation de l'amplitude.

8. Procédé selon l'une quelconque des revendications précédentes, **caractérisé en ce que** la fréquence d'émission des signaux émis est modifiée.

9. Procédé selon l'une quelconque des revendications précédentes, **caractérisé en ce qu'**une vitesse est mesurée et que les capteurs de distance (S1, S2) sont activés en fonction de la vitesse mesurée.

10. Procédé selon l'une quelconque des revendications précédentes, **caractérisé en ce que** les deux capteurs de distance (S1, S2) émettent simultanément les signaux.

11. Dispositif de détection d'objets (6, 7, 8), notamment dans l'environnement d'un véhicule (1) avec :
au moins un premier capteur de distance (S1) pour des objets (6) placés dans une première plage de distance ainsi qu'un deuxième capteur de distance (S2) pour des objets (8) placés dans une deuxième plage de distance ;
les deux plages de distance n'étant pas identiques et la limite supérieure de la deuxième plage de distance étant davantage éloignée que la limite supérieure de la première plage de distance ; et
un ou plusieurs dispositifs de commande servant à commander les deux capteurs de distance (S1, S2) de façon à leur faire émettre respectivement à un moment précis un signal similaire et à détecter à l'intérieur d'un intervalle de temps (T1, T2) ultérieur un signal réfléchi et/ou dévié ;
**caractérisé en ce que** :
le premier capteur de distance (S1) peut être commandé de telle sorte par le dispositif de commande qu'il ne détecte que les signaux dont la durée de parcours est inférieure à la durée de parcours correspondant à une réflexion du signal émis au niveau d'un objet (6) placé à une distance correspondant à la limite supérieure de la première plage de distance ; et
le deuxième capteur de distance (S2) peut être commandé de telle sorte par le dispositif de commande qu'il ne détecte que les signaux dont la durée de parcours est supérieure à la durée de parcours correspondant à une réflexion du signal émis au niveau d'un objet (8) placé à une distance supérieure ou égale à la limite supérieure de la première plage de distance et dont la durée de parcours est inférieure à la durée de parcours correspondant à une réflexion du signal émis au niveau d'un objet (8) placé à une distance correspondant à la limite supérieure de la deuxième plage de distance.

12. Dispositif selon la revendication 11, **caractérisé en ce que** les deux capteurs de distance (S1, S2) sont des capteurs à ultrasons.

13. Dispositif selon la revendication 11 ou 12, **caractérisé en ce que** le premier capteur de distance (S1) peut être commandé de telle sorte par le dispositif de commande qu'il ne détecte que les signaux dont la durée de parcours est supérieure à la durée de parcours correspondant à une réflexion du signal émis au niveau d'un objet (6) placé à une distance correspondant à la limite inférieure de la première plage de distance.

14. Dispositif selon l'une quelconque des revendications 11 à 13, **caractérisé en ce que** le premier capteur de distance (S1) ne détecte que les signaux supérieurs à un premier niveau seuil (SP1) et que le deuxième capteur de distance (S2) ne détecte que les signaux supérieurs à un deuxième niveau sonore (SP2), le premier niveau seuil (SP1) étant supérieur au deuxième niveau seuil (SP2).

15. Dispositif selon la revendication 14, **caractérisé en ce que** les deux capteurs de distance (S1, S2) sont disposés à une certaine distance l'un de l'autre, de sorte qu'un signal émis par le premier capteur de distance (S1) et réfléchi à une certaine distance au niveau d'un objet placé dans la deuxième plage de distance dans laquelle le deuxième capteur de distance (S2) est détecté sous la forme d'un signal dont le niveau est inférieur au deuxième niveau seuil (SP2).

16. Dispositif selon l'une quelconque des revendications 11 à 15, **caractérisé en ce que** le deuxième capteur de distance (S2) est commandé de telle sorte par le dispositif de commande qu'il ne détecte que les signaux dont la durée de parcours est supérieure à la durée de parcours correspondant à une réflexion au niveau d'un objet placé à une distance correspondant à la limite supérieure de la plage de distance du premier capteur de distance (S1) de sorte que les deux plages de distance sont disjointes.

17. Dispositif selon l'une quelconque des revendications 11 à 16, **caractérisé en ce que** les signaux émis par les deux capteurs de distance (S1, S2) peuvent être codés.

18. Dispositif selon l'une quelconque des revendications 11 à 17, **caractérisé en ce que** les signaux émis par les deux capteurs de distance (S1, S2) peuvent être codés par modulation de la largeur de pulsation et/ou par modulation de l'amplitude.

19. Dispositif selon l'une quelconque des revendications 11 à 18, **caractérisé en ce que** la fréquence d'émission des signaux émis par les deux capteurs de distance (S1, S2) peut varier.

20. Dispositif d'aide au stationnement pour véhicules, **caractérisé par** la présence d'un dispositif destiné à la détection d'objets selon l'une quelconque des revendications 11 à 19, un premier et un deuxième capteur de distance (S1, S2) étant respectivement disposés au moins dans la zone des deux coins avant du véhicule.

21. Dispositif selon la revendication 20, **caractérisé en ce que** le dispositif destiné à la détection d'objets est couplé à un dispositif de mesure de la vitesse et que les capteurs de distance (S1, S2) peuvent être activés en fonction de la vitesse mesurée.
